# EUROPEAN PATENT APPLICATION

(11) **EP 4 296 937 A1**
(43) Date of publication of application: **27.12.2023**
(21) Application number: 22816260.8
(22) Date of filing: 26.02.2022
(51) Int. Cl.: G06Q 50/30, G06Q 50/00, G06Q 50/10, G01S 19/01

(54) **SIGNAGE SYSTEM OPERATING IN CONJUNCTION WITH USER TERMINAL**

(30) Priority: 31.05.2021 KR 20210070430
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2022/002837
(87) International publication number: WO 2022/255597

(57) **Abstract**

Proposed is a signage system operating in conjunction with a user terminal, wherein a user's social activities, such as exchanging opinions, on an online business place local page are output to a signage installed in an offline business place, and the social activities are supported through various community services, such as exchanging opinions related to the business place, filling in questionnaires, and participating in social games, and the details of the social activities are output to the signage, thereby providing a variety of fun to customers visiting the business place and customers participating in the social activities and enabling the local page to be frequently used.

## Description

### Technical Field

The present disclosure relates to a signage system. More particularly, the present disclosure relates to a signage system operating in conjunction with a user terminal.

### Background Art

Signage is a communication tool that can induce marketing and advertising effects, and customer experiences for businesses. Signage is an image display device that is installed in public spaces or commercial spaces to provide various information and advertisements in real time. In particular, digital signage uses digital technology to display an image and information on a display screen and provides a comprehensive management platform that can be remotely controlled over a network.

Signage is primarily installed outdoors, in subway stations, and public places, but recently, the installation locations have become more diverse, including restaurants, cafes, and apartment elevators. However, the purpose of signage has not significantly expanded beyond its role as an advertising board.

On the other hand, Local Box, which can be used for purposes such as providing local information and local advertising, focuses on efficiently providing users with various pieces of information. However, due to the limitations of being a local-related platform, it is difficult to enable the platform to be frequently used by giving customers fun and inducing interest. Therefore, it is necessary to develop a technology that can provide customers with a variety of fun to enable Local Box to be frequently used.

As a related art of the present disclosure, Korean Patent No. 10-1823987 (titled: LOCAL BOX ADVERTISEMENT SERVICE SYSTEM IN WHICH PRIORITIES OF BANNER ADVERTISEMENT IS DETERMINED BY REFERENCE POSITION, registration date: 25 January 2018) was proposed.

### Disclosure

### Technical Problem

The present disclosure has been made keeping in mind the above problems occurring in the previously proposed methods, and the present disclosure is directed to providing a signage system operating in conjunction with a user terminal, wherein a user's social activities, such as exchanging opinions, on an online business place local page are output to a signage installed in an offline business place, and the social activities are supported through various community services, such as exchanging opinions related to the business place, filling in questionnaires, and participating in social games, and the details of the social activities are output to the signage, thereby providing a variety of fun to customers visiting the business place and customers participating in the social activities and enabling the local page to be frequently used.

In addition, the present disclosure is directed to providing a signage system operating in conjunction with a user terminal, wherein when the user terminal is located in a business place, on-site participation is confirmed and the user is indicated as an on-site participant or social activities for the on-site participant are supported, thereby adding fun to the social activities through a sense of realism in real time and increasing the reliability of the user's opinions.

### Technical Solution

In order to achieve the above object, according to one aspect of the present disclosure, there is provided a signage system operating in conjunction with a user terminal,
the signage system including:
a service server configured to operate a local platform including a business place-specific local page for a social activity including exchanging opinions related to a business place using the user terminal;
the user terminal configured to access the local platform and the local page provided by the service server, and perform the social activity on the local page; and
a signage installed in the business place, and configured to output the social activity performed by the user terminal on the local page of the business place,
wherein the service server includes:
   a platform operating part configured to operate the local platform including the business place-specific local page;
   a social activity support part configured to provide a community service that supports the social activity of the user terminal accessing the local page; and
   a signage management part configured to control transmission such that details of the social activity of a user performed through the community service provided by the social activity support part are output to the signage installed in the business place of the local page.

Preferably, the community service includes
at least one selected from a group of a bulletin board, generating a questionnaire and confirming a result, generating a vote and confirming a result, and a social game.

Preferably, the service server further includes
an on-site participation confirmation part configured to confirm on-site participation when the user terminal is located in the business place.

More preferably, the social activity support part is configured to
indicate that the user is an on-site participant, within the community service used by the user terminal of which on-site participation is confirmed.

Even more preferably, the social activity support part is configured to
support the user terminal of which on-site participation is confirmed, with the social activity including event information for the on-site participant.

More preferably, the on-site participation confirmation part is configured to
confirm on-site participation of the user terminal by using a beacon device installed in the business place.

More preferably, the on-site participation confirmation part is configured to
confirm on-site participation of the user terminal by using location information of the business place and GPS location information received from the user terminal.

Preferably, the signage is configured to
insert the opinions, which are the details of the social activity, related to the business place into a memo paper image and output the memo paper image in real time.

### Advantageous Effects

According to the signage system, proposed in the present disclosure, operating in conjunction with a user terminal, a user's social activities, such as exchanging opinions, on an online business place local page are output to a signage installed in an offline business place, and the social activities are supported through various community services, such as exchanging opinions related to the business place, filling in questionnaires, and participating in social games, and the details of the social activities are output to the signage, thereby providing a variety of fun to customers visiting the business place and customers participating in the social activities and enabling the local page to be frequently used.

In addition, according to the signage system, proposed in the present disclosure, operating in conjunction with a user terminal, when the user terminal is located in a business place, on-site participation is confirmed and the user is indicated as an on-site participant or social activities for the on-site participant are supported, thereby adding fun to the social activities through a sense of realism in real time and increasing the reliability of the user's opinions.

### Description of Drawings

FIG. 1 is a diagram illustrating a configuration of a signage system operating in conjunction with a user terminal, according to an embodiment of the present disclosure.
FIG. 2 is a diagram illustrating an example of a business place in which signages are installed, in a signage system operating in conjunction with a user terminal, according to an embodiment of the present disclosure.
FIG. 3 is a diagram illustrating a detailed configuration of a service server in a signage system operating in conjunction with a user terminal, according to an embodiment of the present disclosure.
FIG. 4 is a diagram illustrating an example of a screen of a user terminal accessing a local page, in a signage system operating in conjunction with a user terminal according to an embodiment of the present disclosure.
FIG. 5 is a diagram illustrating an example of a screen of signage on which social activities of users are output, in a signage system operating in conjunction with a user terminal according to an embodiment of the present disclosure.
FIG. 6 is a diagram illustrating an example of a screen of a user terminal on which an on-site participation confirmation result of a user is output, in a signage system operating in conjunction with a user terminal according to an embodiment of the present disclosure.

### <Description of the Reference Numerals in the Drawings>

100: service server
110: platform operating part
120: social activity support part
130: signage management part
140: on-site participation confirmation part
200: user terminal
300: signage

### Best Mode

Hereinafter, preferred embodiments of the present disclosure will be described in detail with reference to the accompanying drawings such that the present disclosure can be easily embodied by those skilled in the art to which the present disclosure belongs. However, in describing the preferred embodiments of the present disclosure in detail, if it is decided that a detailed description of the known function or configuration related to the present disclosure makes the subject matter of the present disclosure unclear, the detailed description will be omitted. In addition, throughout the drawings, the same reference numerals are used for parts having similar functions and operations.

Throughout the specification, when a part is referred to as being "connected" to another part, it includes not only being "directly connected", but also being "indirectly connected" by interposing the other part therebetween. In addition, when a part "includes" an element, this means that it further includes other elements, but does not exclude other elements, unless specifically stated otherwise.

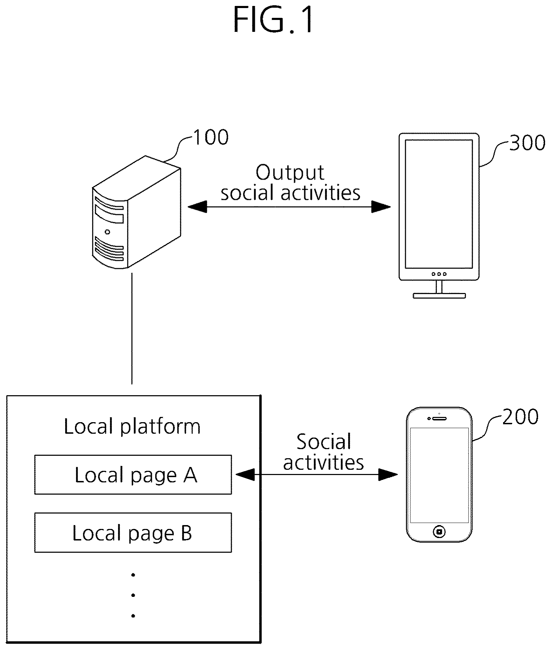

FIG. 1 is a diagram illustrating a configuration of a signage (300) system operating in conjunction with a user terminal 200, according to an embodiment of the present disclosure. As shown in FIG. 1, according to an embodiment of the present disclosure, a signage (300) system operating in conjunction with a user terminal 200 may include a service server 100, the user terminal 200, and a signage 300.

That is, according to the present disclosure, the service server 100 operates a local platform including a business place-specific local page, and outputs social activities, such as exchanging opinions on an online business place local page, of a user accessing a local platform with a user terminal 200 to a signage 300 installed in the offline business place.

In this way, the service server 100 provides community services to support various social activities, such as exchanging opinions related to a business place, filling in questionnaires, and participating in social games, and outputs the details of social activities to an offline signage 300 in real time, so that customers visiting the business place may enjoy seeing the signage 300 on which the social activities are output in real time and may immediately participate in the social activities by accessing the local page of the business place on the signage 300, whereby the problem that the existing virtual local box is not frequently used can be solved, and the local page and the local platform can be frequently used. In addition, the signage 300, which has remained in the role of a billboard, can be used as a venue for online and offline community activities of users.

Herein, the social activities man mean social activities including activities in various online social media, such as posting opinions, writing comments, sharing content, filling in questionnaires, participating in voting, and participating in games (social games) with other users. In addition, the community services, as a service supporting social activities, may include a bulletin board for posting opinions, exchanging opinions, and writing comments, generating questionnaires and providing results, generating votes and providing results, and social games.

Hereinafter, each of the elements constituting a signage (300) system operating in conjunction with a user terminal (200) according to an embodiment of the present disclosure will be described in detail.

The service server 100 may operate a local platform including a business place-specific local page for social activities including exchange of opinions related to a business place using a user terminal 200. That is, the local platform includes a local page for each business place, and a user who has accessed the local platform may perform various social activities, such as exchanging opinions and sharing content, on a local page of each business operator. The service server 100 may operate the local platform and provide various community services such that the user terminal 200 accesses the local platform over a network to perform social activities for each business place.

Herein, the network may be realized as a wired network, such as a local area network (LAN), a wide area network (WAN), or a value-added network (VAN), or any type of wireless network, such as a mobile radio communication network, a satellite network, Bluetooth, a wireless broadband internet (Wibro), High Speed Downlink Packet Access (HSDPA), Long-Term Evolution (LTE), 5th generation mobile telecommunication (5G), etc.

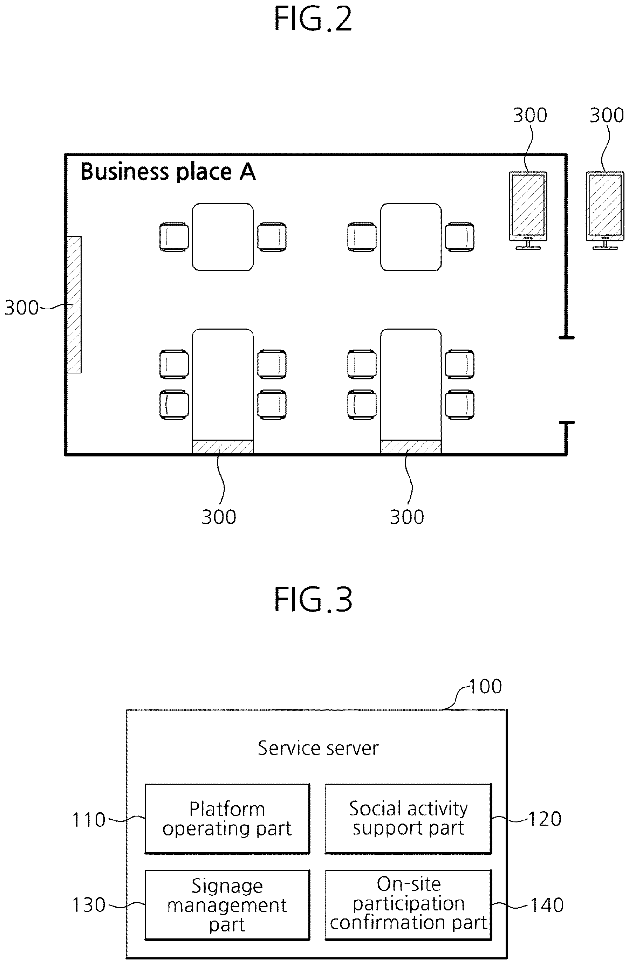

A detailed configuration of the service server 100 will be described later with reference to FIG. 3.

The user terminal 200 may access the local platform and the local pages that the service server 100 provides, and may perform social activities on the local page. The user terminal 200 may be realized as an electronic device of a user that accesses the local pages to perform various social activities, such as exchanging opinions related to the business places.

Herein, examples of the electronic device may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HNID)), a fabric or clothing-integrated type (e.g., electronic clothing), a body-attachable type (e.g., a skin pad or tattoo), and an implantable circuit. In various embodiments, the electronic device is not limited to the aforementioned devices, and may be a combination of two or more of the aforementioned various devices.

The signage 300 is installed in a business place, and may output social activities performed by a user terminal 200 on a local page of a business place. Herein, the signage 300 may mean a display device equipped with a display panel, and at least one signage 300 may be installed inside or outside a business place.

FIG. 2 is a diagram illustrating an example of a business place in which signages 300 are installed, in a signage (300) system operating in conjunction with a user terminal 200, according to an embodiment of the present disclosure. As shown in FIG. 2, according to an embodiment of the present disclosure, in a signage (300) system operating in conjunction with a user terminal 200, three signages 300 may be installed inside business place A and one signage 300 may be installed outside business place A. Alternatively, a signage may be installed for each table, and the installation location and number may vary.

In the meantime, business places where signages 300 are installed may be various shops, such as cafes, restaurants, merchandise stores, and beauty salons, as well as apartment complexes and building elevators.

FIG. 3 is a diagram illustrating a detailed configuration of a service server 100 in a signage (300) system operating in conjunction with a user terminal 200, according to an embodiment of the present disclosure. As shown in FIG. 3, according to an embodiment of the present disclosure, a service server 100 of a signage (300) system operating in conjunction with a user terminal 200 may include a platform operating part 110, a social activity support part 120, and a signage management part 130, and may further include an on-site participation confirmation part 140.

The platform operating part 110 may operate a local platform including a business place-specific local page. Herein, the local page may be generated and operated for each business place. Advertisements and event information of the business place may be posted on the local page. Various community services that the social activity support part 120 provides may be used on the local page.

The user terminal 200 may access and use the local platform operated by the platform operating part 110 by using an application or a web app for using the local platform or using an URL. For example, the user terminal 200 may access the local platform and may search for or select a particular business place to enter a local page, or may directly access a local page of a business place using a QR code provided in the business place. In addition, according to an embodiment, when a user terminal 200 accesses a local platform, the on-site participation confirmation part 140, which will be described later in detail, determines the location of the user terminal 200 and provides a business place local page of the determined location automatically.

The social activity support part 120 may provide community services that support social activities of a user terminal 200 accessing a local page. Herein, the community services may include, a bulletin board, generating questionnaires and confirming results, generating votes and confirming results, and social games.

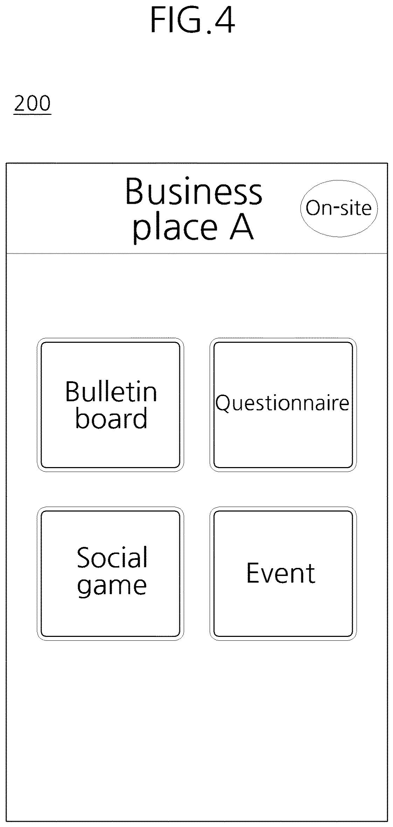

FIG. 4 is a diagram illustrating an example of a screen of a user terminal 200 accessing a local page, in a signage (300) system operating in conjunction with a user terminal 200, according to an embodiment of the present disclosure. As shown in FIG. 4, according to an embodiment of the present disclosure, in a signage (300) system operating in conjunction with a user terminal 200, the user terminal 200 may access a local page and may select and use a community service provided by the social activity support part 120. The user may select a bulletin board among the community services provided to the user terminal 200 to post opinions, write comments, or share content, or may select a questionnaire menu to generate questionnaires/votes, participating in questionnaires/votes, or checking questionnaire/vote results. In addition, the user may participate in games (social games) with other users, or may check information on events taking place in a business place.

The signage management part 130 may control transmission such that the details of the social activities of a user performed through the community services provided by the social activity support part 120 are output to a signage 300 installed in the business place of the local page.

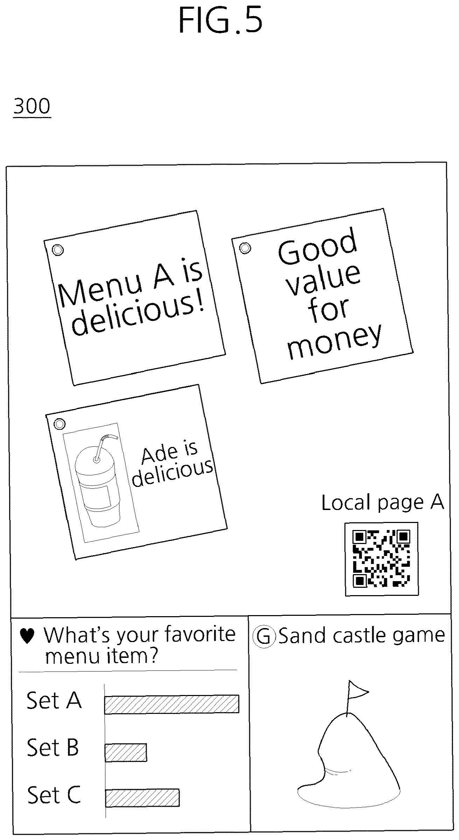

FIG. 5 is a diagram illustrating an example of a screen of a signage 300 on which social activities of users are output, in a signage (300) system operating in conjunction with a user terminal 200, according to an embodiment of the present disclosure. As shown in FIG. 5, according to an embodiment of the present disclosure, a signage 300 of a signage (300) system operating in conjunction with a user terminal 200 may output the details, such as posts, questionnaire/vote results, or current states of social games, of social activities performed by various users on the local page of the business place.

More specifically, the signage 300 may insert opinions related to a business place, which are the details of social activities, into memo paper images and may output the images in real time. That is, in conjunction with the community services provided by the social activity support part 120, users' posts, content, opinions, and comments posted on the bulletin board are output to the signage 300. Opinions may be inserted into memo paper images and output in real time such that the digital signage 300 brings the users a sense of realism and fun of writing opinions on memo paper and attaching the paper in the offline business place.

In addition, the signage 300 may output questionnaire/vote results, which are one of the details of social activities, such that the users may enjoy checking results of questionnaires or votes performed on an online local page, with the offline signage 300. In addition, the signage 300 may output the current state of a social game played with the participation of several users, so that a sense of realism and fun, and inducement to participation of other users may be achieved.

According to an embodiment, as shown in FIG. 2, when there are a plurality of signages 300 installed in a particular business place, the signage management part 130 may perform control to transmit details of social activities to all the signages 300 installed in the business place, and the signages 300 may output the same details or different details. For example, when there are three signages installed in a particular business place, the signages may output the same screen (for example, the screen as shown in FIG. 5), or may output a post, a questionnaire/vote result, and a current state of a social game among the social activities, respectively.

In the meantime, in order for users to easily participate in social activities output to the signage 300, a QR code or access information in which connection information to the local page of the business place is recorded may be displayed on the signage 300 as shown in FIG. 5. A customer visiting the business place may scan the QR code or use the access information with the user terminal 200 and may access the local page to perform social activities, such as posting opinions, filling in questionnaires, and participating in social games.

The on-site participation confirmation part 140 may confirm on-site participation when the user terminal 200 is located in a business place. When a user visits a business place and performs a social activity on the local page of the business place, the user may check the details of the social activity in real time on the signage 300 and may interact with other visiting customers, maximizing a sense of realism and fun. Accordingly, the service server 100 verifies a user's location through the on-site participation confirmation part 140 to check whether the user is an on-site participant, thereby enhancing a sense of realism and reliability of user opinions.

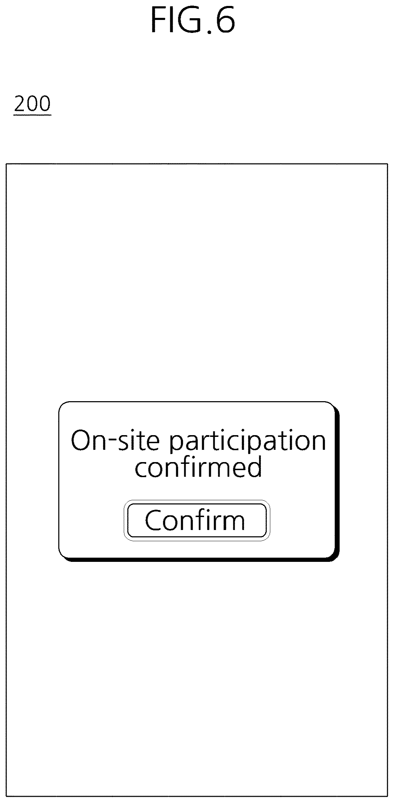

FIG. 6 is a diagram illustrating an example of a screen of a user terminal 200 on which an on-site participation confirmation result of a user is output, in a signage (300) system operating in conjunction with a user terminal 200, according to an embodiment of the present disclosure. As shown in FIG. 6, according to an embodiment of the present disclosure, an on-site participation confirmation part 140 of a signage (300) system operating in conjunction with a user terminal 200 may determine the location of the user terminal 200 accessing a local platform, may verify the user in the business place as an on-site participant, and may output a result of verification as a push message to the user terminal 200.

Herein, the on-site participation confirmation part 140 may use a beacon device installed in the business place to confirm on-site participation of the user terminal 200. The beacon device may be installed at the entrance or inside of the business place, and causes a user terminal 200 inside the business place to receive a beacon signal to verify the location.

According to an embodiment, the on-site participation confirmation part 140 may use location information of a business place and GPS location information received from a user terminal 200 to confirm on-site participation of the user terminal 200. However, location information by GPS or mobile communication networks indoors or underground may be inaccurate or confused with other nearby business places, so it is preferable to confirm on-site participation accurately using a beacon device.

In the meantime, the social activity support part 120 may indicate that the user is an on-site participant, within the community services used by the user terminal 200 of which on-site participation is confirmed. That is, as shown in FIG. 4, the user terminal 200 of which on-site participation is confirmed may be indicated as an on-site participant using a badge such as "on-site" within the local page of the business place.

In addition, the social activity support part 120 may mark, within the community services used by the user terminal 200 of which on-site participation is confirmed, on-site participation on the user's social activities selected from the group of the user's account states, posts, comments, and content. That is, the details of social activities, such as content, posts, or opinions, of the user may be marked as on-site participation with a badge.

According to an embodiment, the social activity support part 120 may support the user terminal 200 of which on-site participation is confirmed, with social activities including event information for an on-site participant. That is, by supporting social activities, such as event information and questionnaires/votes, available only to confirmed on-site participants, on-site participation may be induced and a sense of realism and fun may be maximized.

As described above, according to a signage (300) system, which is proposed in the present disclosure, operating in conjunction with a user terminal 200, a user's social activities, such as exchanging opinions, on an online business place local page are output to a signage 300 installed in an offline business place, and the social activities are supported through various community services, such as exchanging opinions related to the business place, filling in questionnaires, and participating in social games, and the details of the social activities are output to the signage 300, thereby providing a variety of fun to customers visiting the business place and customers participating in the social activities and enabling the local page to be frequently used.

In addition, according to the signage (300) system, proposed in the present disclosure, operating in conjunction with a user terminal 200, when the user terminal 200 is located in a business place, on-site participation is confirmed and the user is indicated as an on-site participant or social activities for the on-site participant are supported, thereby adding fun to the social activities through a sense of realism in real time and increasing the reliability of the user's opinions.

In the meantime, the present disclosure may include a computer-readable recording medium including program commands for performing operations implemented by various communication terminals. Examples of the computer-readable recording medium include magnetic recording media such as hard disks, floppy disks and magnetic tapes; optical data storage media such as CD-ROMs or DVD-ROMs; magneto-optical media such as floptical disks; and hardware devices, such as read-only memory (ROM), random-access memory (RAM), and flash memory, which are particularly structured to store and implement the program instruction.

The computer-readable recording medium may include program commands, data files, data structures, and the like separately or in combinations. Herein, the program commands being recorded in the computer-readable medium may correspond to a program command that is specifically designed and configured for the embodiments of the present disclosure, or the program command may correspond to a program command that is disclosed and available to anyone skilled in or related to computer software. For example, the program commands may include machine language codes 1, which are created by a compiler, as well as high-level language codes 1, which may be executed by a computer by using an interpreter.

Various modifications or applications of the above-described present disclosure may be made by those skilled in the art to which the present disclosure belongs, and the scope of the technical idea according to the present disclosure should be defined by the following claims.

## Claims

1. A signage (300) system operating in conjunction with a user terminal (200), the signage (300) system comprising:
a service server (100) configured to operate a local platform including a business place-specific local page for a social activity including exchanging opinions related to a business place using the user terminal (200);
the user terminal (200) configured to access the local platform and the local page provided by the service server (100), and perform the social activity on the local page; and
a signage (300) installed in the business place, and configured to output the social activity performed by the user terminal (200) on the local page of the business place,
wherein the service server (100) comprises:
a platform operating part (110) configured to operate the local platform including the business place-specific local page;
a social activity support part (120) configured to provide a community service that supports the social activity of the user terminal (200) accessing the local page; and
a signage management part (130) configured to control transmission such that details of the social activity of a user performed through the community service provided by the social activity support part (120) are output to the signage (300) installed in the business place of the local page,
wherein the user terminal (200) is configured to access the local platform over a network by using an application or a web app for using the local platform, enter a local page of a particular business place, perform the social activity on the local page of the business place, and output the social activity performed by the user on the local page, which is online, of the business place to the signage (300) installed in the business place, which is offline,
wherein the community service includes at least one selected from a group of a bulletin board, generating a questionnaire and confirming a result, generating a vote and confirming a result, and a social game, and
wherein the signage (300) is configured to output a current state of the social game played with participation of several users, so that a sense of realism and fun are provided and participation of other users is induced.

2. The signage (300) system of claim 1, wherein the service server (100) further comprises
an on-site participation confirmation part (140) configured to confirm on-site participation when the user terminal (200) is located in the business place.

3. The signage (300) system of claim 2, wherein the social activity support part (120) is configured to
indicate that the user is an on-site participant, within the community service used by the user terminal (200) of which on-site participation is confirmed.

4. The signage (300) system of claim 3, wherein the social activity support part (120) is configured to
support the user terminal (200) of which on-site participation is confirmed, with the social activity including event information for the on-site participant.

5. The signage (300) system of claim 2, wherein the on-site participation confirmation part (140) is configured to
confirm on-site participation of the user terminal (200) by using a beacon device installed in the business place.

6. The signage (300) system of claim 2, wherein the on-site participation confirmation part (140) is configured to
confirm on-site participation of the user terminal (200) by using location information of the business place and GPS location information received from the user terminal (200).

7. The signage (300) system of claim 1, wherein the signage (300) is configured to
insert the opinions, which are the details of the social activity, related to the business place into a memo paper image and output the memo paper image in real time.
